# EUROPEAN PATENT SPECIFICATION

(11) **EP 3 683 369 B1**
(45) Date of publication and mention of the grant of the patent: **03.11.2021**
(21) Application number: 20151593.9
(22) Date of filing: 14.01.2020
(51) Int. Cl.: E03C 1/02

(54) **A WALL BEND FIXTURE AND A WALL BEND FIXTURE ASSEMBLY**
WANDBIEGEHALTERUNG UND WANDBIEGEHALTERUNGSANORDNUNG
FIXATION COUDÉE MURALE ET ENSEMBLE FIXATION COUDÉE MURALE

(30) Priority: 16.01.2019 SE 1950051
(43) Date of publication of application: 22.07.2020
(73) Proprietor: Villeroy & Boch Gustavsberg AB, 134 29 Gustavsberg (SE)
(72) Inventor: CANI, Pär, 441 43 Alingsås (SE); OLSSON, Kristian, 447 94 Vårgårda (SE); RYDETORP, Björn, 447 95 Vårgårda (SE)
(74) Representative: Valea AB

(56) References cited:
- EP-A1- 3 026 182
- EP-A2- 2 014 838

## Description

### TECHNICAL FIELD

The present invention relates to a wall bend fixture and to a wall bend fixture assembly for installing a pipe assembly in a structure.

### BACKGROUND

Water pipes in buildings are commonly arranged inside walls of the building. To protect the walls from possible leakage, a so-called pipe-in-pipe technique is normally used, in which a water pipe, usually a relatively stiff plastic pipe such as a cross-linked polyethylene (PEX) pipe, is arranged inside an outer pipe, usually a corrugated plastic pipe. The outer pipe thereby serves as a protective pipe preventing a possible leakage from the water pipe from damaging the walls of the building.

Lead-through devices positioned inside the walls are used to bring the water pipes into the rooms in which faucets or other water outlets are to be installed. There are two main categories of such lead-through devices, namely a first category which may be referred to as wall boxes, and a second category which may be referred to as wall bend fixtures.

A wall box is a sealed box intended to be mounted inside the wall, with a water coupling provided inside the box. The water pipe is connected to the water coupling, and the wall box is in turn connected to e.g. a water blender in a bathroom or similar. Wall boxes are relatively small, and therefore easy to fit in thin walls. They are also relatively easy to mount, since none of the pipes need to be bent during installation. However, in order to install the wall box, it is necessary to make a relatively large opening in the wallboard behind which the wall box is to be placed. The wall box also contains a water coupling positioned inside the wall. The location of the water coupling inside the wall increases the risk of leakage causing damage to the wall, and also renders the water coupling difficult to inspect.

A wall bend fixture requires no water coupling inside the wall. Instead, the water pipe is bent by an angle of 90° and brought out through the wallboard inside of which the wall bend fixture is installed.

EP2014838 discloses a wall bend fixture, which is particularly suitable for mounting in e.g. a bathroom having a moisture barrier provided in its wall. The wall bend fixture disclosed therein reduces the need to drill holes during mounting of e.g. a water mixer in a bathroom. For this purpose, the wall bend fixture is configured to be clamped to the wallboard using a retainer.

EP3026182 shows a fixture for bending an inner pipe together with an outer pipe. The document discloses the features of the preamble of claim 1.

The absence of water coupling inside the wall reduces the risk of leakage inside the wall and the installation is easier to inspect than in the case of a wall box. The wall bend fixture also requires a relatively small opening in the wall in which it is mounted. However, the bending of the pipes may affect the strength of the tubes, which may be problematic from a leakage point of view. Installations requiring bending of both pipes of a pipe assembly are therefore not always acceptable.

### SUMMARY

It is a primary object of the present invention to overcome or at least alleviate at least one of the disadvantages of the prior art, or to provide a useful alternative. In particular, it is an object to provide a wall bend fixture and a wall bend fixture assembly by means of which the risk of leakage associated with the wall bend fixture may be further reduced.

At least the primary object may be achieved by the invention as defined in claim 1. Embodiments of the invention are set forth in the appended dependent claims, in the following description and in the drawings.

The present invention relates to a wall bend fixture for installing a pipe assembly in a structure, the wall bend fixture being adapted to be mounted in the structure and guide at least an inner pipe of the pipe assembly through the structure from a first side of the structure to an outlet side of the structure, the wall bend fixture comprising:
- a housing defining a conduit for receiving and guiding the pipe assembly, the conduit comprising:
   ∘ a first end portion configured to be located at the first side of the structure when the wall bend fixture is mounted in the structure, wherein the first end portion comprises a first opening configured to receive the pipe assembly at the first side,
   ∘ a second end portion configured to be located at the second side of the structure when the wall bend fixture is mounted in the structure, wherein the second end portion comprises a second opening configured to deliver the inner pipe at the second side,
   ∘ a bent portion extending between the first end portion and the second end portion,
- a locking member configured to mechanically lock an outer pipe of the pipe assembly within the conduit,
- a sealing member configured to provide a seal between the outer pipe and an inner wall of the housing in the first end portion of the conduit.

The sealing member is arranged in the first end portion of the conduit, i.e. behind the bent portion of the conduit in the direction of extension, either in the first opening or between the first opening and the bent portion. When the pipe assembly is received in the wall bend fixture, a sealed conduit which encloses an end of the outer pipe is thereby provided, delimited by the inner wall of the housing and the sealing member. If the inner pipe, which may be a water pipe, becomes damaged within the sealed conduit, water is therefore prevented from leaking out into the wall. If the water pipe is damaged below the sealing member, the protective outer pipe, secured in the wall bend fixture by means of the locking member, ensures that no water leaks out into the wall. Thus, the inner pipe is bent and lead through the structure via the sealed conduit. The locking member, preferably formed integrally with the housing, ensures that an end of the outer pipe is located within the sealed conduit and does not slip out therefrom.

The structure in which the wall bend fixture is configured to be mounted and fixed with respect to may be a building element such as a wallboard. The structure may form part of e.g. a wall, a ceiling, a door, a floor, or similar.

According to an embodiment, the inner wall of the housing is water impermeable. Thus, the conduit is efficiently sealed when the pipe assembly is mounted therein by means of the housing and the sealing member.

According to an embodiment, the sealing member comprises a sealing ring portion located behind the locking member in a direction of extension of the wall bend fixture. In other words, the locking member is located between the sealing ring portion and the second opening of the conduit. This further reduces the risk of leakage, since the outer pipe is secured at a position within the sealed conduit. In alternative embodiments, the locking member may be provided between the first opening and the sealing ring portion, or in connection with the sealing ring portion, in which case it must be ensured that an end of the outer pipe reaches past the sealing member when inserted into the conduit. The locking member and the sealing member may also be formed integrally, in which case the outer pipe can only be pushed/pulled in the direction of extension through the combined locking member and sealing member, and not in the opposite direction.

According to an embodiment, the locking member is located in the first end portion of the conduit. There is thus no need to bend the outer pipe, thereby reducing the risk of affecting the strength of the outer pipe. Preferably, the locking member is located in the first end portion and ahead of the sealing ring portion in a direction of extension of the wall bend fixture.

According to an embodiment, the locking member comprises a flange configured to interlock with a groove provided in the outer pipe. The outer pipe may e.g. be a corrugated pipe, in which case the flange may be configured to interlock with one of the grooves formed as a result of the corrugation. The flange thus extends into the conduit. It may extend around a portion of a circumference of the conduit or around the entire circumference. Instead of a flange, the locking member may e.g. comprise a plurality of protrusions arranged around a circumference of the conduit, configured to interlock with a groove of the outer pipe.

According to an embodiment, the conduit is configured to allow a right angle bend of the inner pipe.

According to an embodiment, the wall bend fixture further comprises at least one abutment surface adapted to abut a surface of the structure on the first side of the structure, and an attachment means for attaching the wall bend fixture to a retainer on the second side of the structure. Hereby, the retainer and the abutment surface may abut opposite surfaces of the structure such that the wall bend fixture is clamped to the structure. This may e.g. be accomplished as described in EP2014838. The attachment means for attaching the retainer may e.g. be an external or an internal thread, provided in connection with the second end portion of the conduit. The at least one abutment surface may also be adapted to abut a surface of e.g. a mounting bracket or similar mounted between the wall bend fixture and the structure.

According to an embodiment, the housing comprises a main part and a movable part, the movable part being movable with respect to the main part between an open position and a closed position, wherein, in the closed position, the main part and the movable part together form at least the bent portion of the conduit. This facilitates installation of the pipe assembly and the bending of the inner pipe, which can be effected using the movable part. A sealing should be provided between the main part and the movable part such that the wall of the conduit is properly sealed in the closed position, preventing leakage. Preferably, the main part and the movable part together form the conduit. In order to lock the housing in its closed position, a locking means may be provided. Preferably the locking means may be releasable, thus facilitating replacement of the pipe assembly if necessary. It is also possible to use e.g. a strap to secure the housing in its closed position.

According to an embodiment, the movable part is configured to be pivotable with respect to the main part. The bending of the inner pipe may thereby be carried out by pivoting the movable part from the open position to the closed position.

According to an embodiment, the movable part comprises the first opening configured to receive the pipe assembly, and the main part comprises the second opening configured to deliver the inner pipe at the second side. Installation of the pipe assembly using the movable part to bend the inner pipe is thereby facilitated. The main part is herein configured to be fixed with respect to the structure. The sealing member is preferably arranged on the movable part such that the outer pipe is passed through the sealing member when the wall bend fixture is in the open position.

According to an embodiment, the locking member is arranged on the main part. Thus, an end of the outer pipe may relatively easily be passed through the sealing member when the wall bend fixture is in the open position, and locked within in the conduit when moving to the closed position.

According to an embodiment, the movable part comprises a stopping member configured to abut an end of the outer pipe, wherein, in the closed position, the stopping member is arranged between the locking member and the bent portion of the conduit. The stopping member facilitates installation of the pipe assembly, since it provides means for ensuring that the end of the outer pipe is inserted far enough into the conduit, i.e. at least past the locking member. If the sealing member is provided between the locking member and the bent portion of the conduit, the stopping member may preferably be arranged between the sealing member and the bent portion of the conduit.

The present invention also relates to a wall bend fixture assembly comprising:
- the proposed wall bend fixture, wherein the wall bend fixture comprises an abutment surface configured to abut an inner surface of the structure, and
- a retainer adapted to be attached to the wall bend fixture on the second side of the structure and abut an outer surface of the structure such that the structure is clamped between the retainer and the abutment surface of the wall bend fixture.

The proposed wall bend fixture assembly may be fixed in the structure by means of clamping, thus reducing the need to drill and possibly destroy a moisture barrier of a wall in which the wall bend fixture is installed. Thus, the proposed wall bend fixture assembly is suitable for use in e.g. bathrooms in which a moisture barrier is provided. The retainer may be attached to the wall bend fixture using attachment means in the form of a threaded connection or similar, as explained above. Of course, other fastening means such as screws or nails may also be used to fix the wall bend fixture to the structure in addition to the retainer, e.g. to prevent rotational movement of the wall bend fixture.

According to an embodiment, the wall bend fixture assembly further comprises:
- a mounting bracket adapted to be mounted on the first side of the structure and adapted to receive the wall bend fixture such that the second end portion of the conduit of the wall bend fixture extends through an opening of the mounting bracket.

The mounting bracket may be used to facilitate installation and positioning of the wall bend fixture and the pipe assembly. It may be adapted to receive one wall bend fixture, or several wall bend fixtures. The mounting bracket may also provide additional support when the wall bend fixture is installed, preventing e.g. rotational movement of the wall bend fixture. It may be attached to the structure using e.g. screws, nails or by gluing. One or more of the at least one abutment surface of the wall bend fixture may in this embodiment be configured to abut a surface of the mounting bracket.

Further advantages and advantageous features of the wall bend fixture and the wall bend fixture assembly will appear from the following detailed description.

### BRIEF DESCRIPTION OF THE DRAWINGS

Embodiments of the present invention will hereinafter be further explained by means of non-limiting examples with reference to the appended drawings, wherein:
- Fig. 1: is a perspective view of a wall bend fixture according to an embodiment of the invention,
- Fig. 2: is a perspective view of a section of the wall bend fixture in fig. 1 and a wall bend fixture assembly including the wall bend fixture,
- Fig. 3: is a sectional view of the wall bend fixture assembly in fig. 1,
- Fig. 4a: is another perspective view of the wall bend fixture in fig. 1,
- Fig. 4b: is another perspective view of the wall bend fixture in fig. 1,
- Fig. 5: is a sectional view of the wall bend fixture assembly in fig. 1,
- Fig. 6: is a perspective view of the wall bend fixture assembly in fig. 2, and
- Fig. 7: is an exploded view of the wall bend fixture assembly in fig. 4.

It should be noted that the appended drawings are schematic and that individual components are not necessarily drawn to scale.

### DETAILED DESCRIPTION

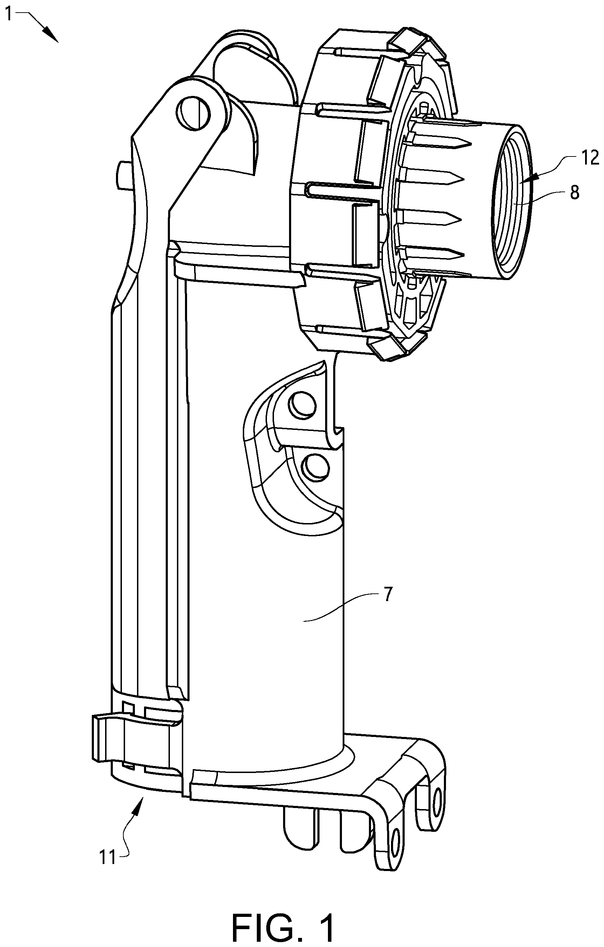

A wall bend fixture 1 according to an embodiment is shown in fig. 1. The wall bend fixture 1 is intended to be mounted in a structure, such as a building element, and guide an inner pipe of a pipe assembly through the structure via a conduit 8 extending between a first opening 11 and a second opening 12, the conduit being defined by a housing 7.

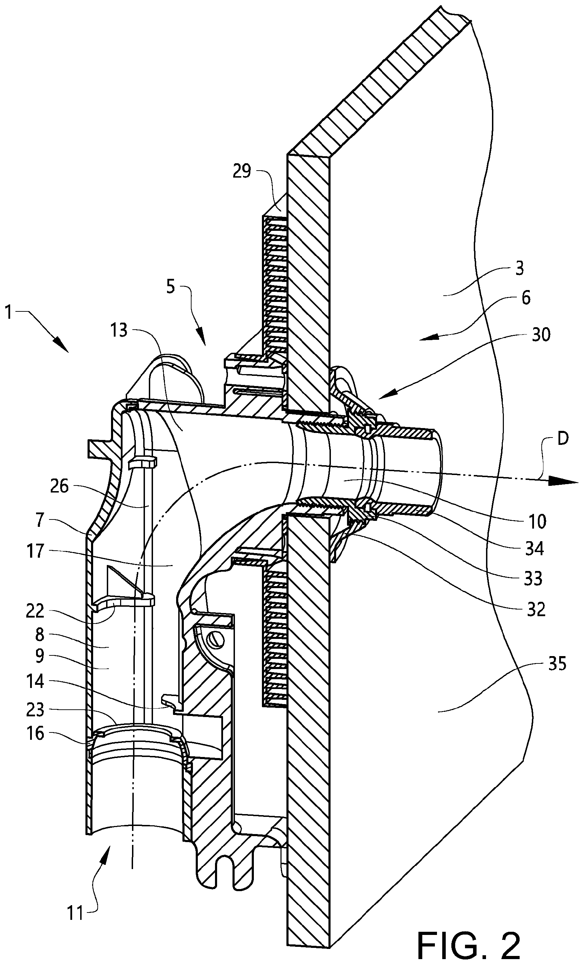

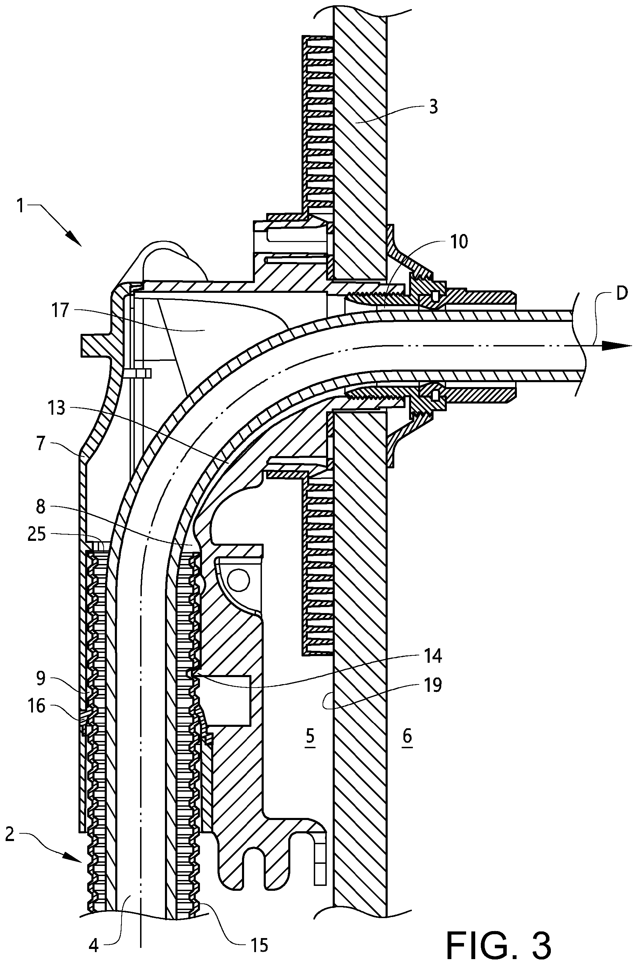

Reference is now also made to fig. 2, in which the wall bend fixture 1 is shown when mounted in a structure 3 in the form of a wallboard, and to fig. 3a, in which the wall bend fixture 1 is shown as it guides an inner pipe 4 of a pipe assembly 2 from a first side 5 of the structure 3 to a second side 6 of the structure 3 in a direction of extension D. Here, the first side 5 corresponds to an inlet side and the second side 6 corresponds to an outlet side. The pipe assembly 2 is configured as a pipe-in-pipe assembly, which apart from the inner pipe 4 comprises a corrugated protective outer pipe 15. The inner pipe 4 is in this case a water pipe, and the wall bend fixture 1 is intended to be connected to a water pipe armature (not shown) such as a pipe coupling, a water tap, a blender, a ball valve or similar on the second side 6.

The housing 7 defines the conduit 8 configured for receiving and guiding the pipe assembly 2. A first end portion 9 of the conduit 8 is located at the first side 5 of the structure when the wall bend fixture 1 is mounted in the structure 3. In the first end portion 9, a first opening 11 for receiving the pipe assembly 2 at the first side 5 of the structure 3 is provided. A second end portion 10 of the conduit 8 is located at the second side 6 of the structure 3 when the wall bend fixture 1 is mounted in the structure 3. A second opening 12 through which the inner pipe 4 may be delivered at the second side 6 of the structure 3 is provided in the second end portion 10. A bent portion 13 of the conduit 8 extends between the first end portion 9 and the second end portion 10, such that the conduit 8 supports a bending by 90° of the inner pipe 4.

Within the conduit 8, a locking member 14 configured to mechanically lock the outer pipe 15 within the conduit 8 is provided. A sealing member 16 configured to provide a seal between the outer pipe 15 and an inner wall 17 of the housing 7 in the first end portion of the conduit 8 is also provided. The sealing member 16 has a sealing ring portion 23 located in the first end portion 9, i.e. behind the bent portion 13 of the conduit 8 in the direction of extension D. The inner wall 17 of the housing is water impermeable, such that a sealed conduit extending from the sealing ring portion 23 and to the second opening 12 may be provided when the pipe assembly 2 is received in the wall bend fixture 1.

In the shown embodiment, the sealing ring portion 23 is located in front of the locking member 14 in the direction of extension D, between the first opening 11 and the locking member 14. The locking member 14 is located in the first end portion 9 of the conduit 8 and is formed as a flange, protruding into the conduit 8 from the inner wall 17 of the housing 7. The locking member 14 is adapted to interlock with one of the grooves of the corrugated outer pipe 15 as schematically illustrated in fig. 3. The locking member 14 is formed integrally with the housing 7 from a rigid material, such as a rigid plastic material, so that it efficiently prevents the outer pipe 15 from slipping out from the wall bend fixture 1. Thus, it is ensured that an end 25 of the outer pipe 15 is secured within the sealed conduit. Water from a possible leakage from the inner pipe 4, occurring ahead of the sealing ring portion 23 in the direction of extension D, will therefore be guided into the protective outer pipe 15 via the sealed conduit, without leaking out into the wall on the first side 5.

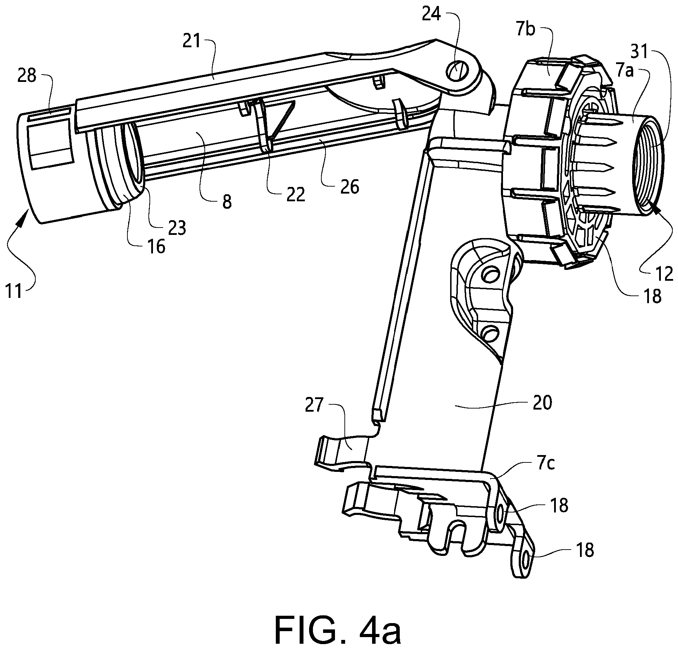

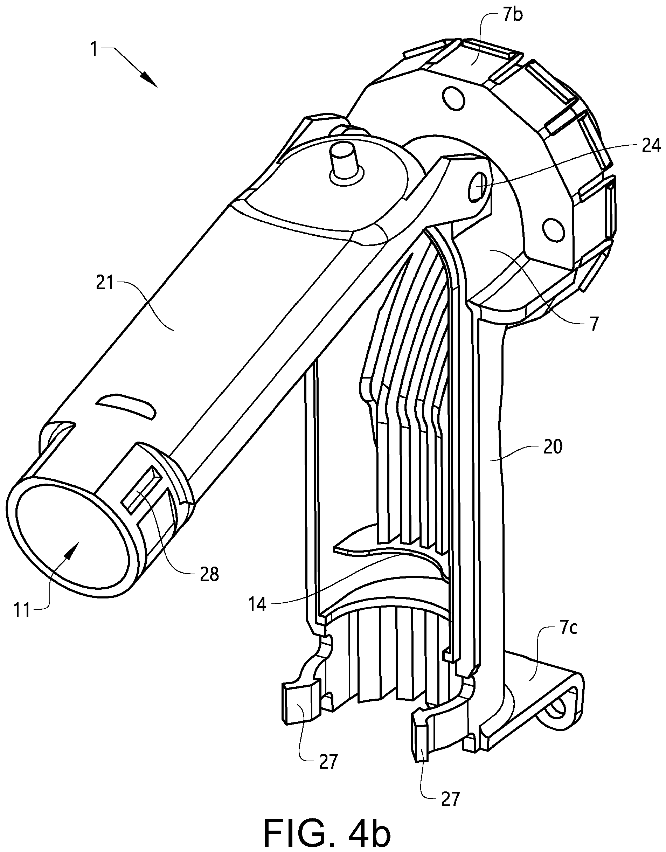

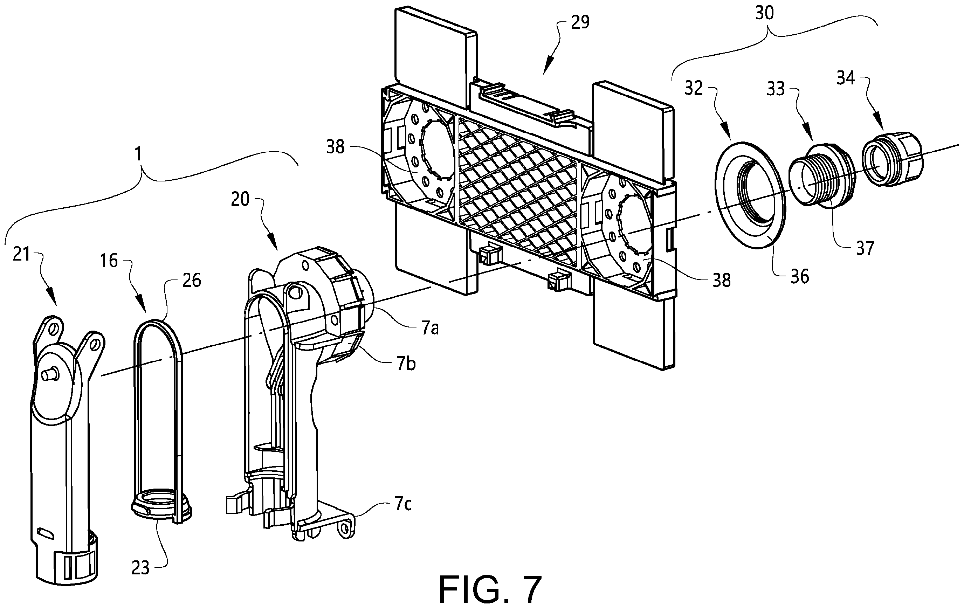

In the shown embodiment, the wall bend fixture 1 is movable between a closed position, shown in figs. 1-3, and an open position, shown in figs. 4a-b. Reference is also made to fig. 7, showing the wall bend fixture 1 in an exploded view. The housing 7 of the wall bend fixture 1 is formed by a main part 20 and a movable part 21, which is pivotable with respect to the main part 21 between the open position and the closed position. In the closed position, the movable part 21 and the main part 20 together form the conduit 8. A hinge joint 24 is provided above the bent portion 13 of the conduit 8. The sealing member 16 comprises, apart from the sealing ring portion 23, a second sealing portion 26 forming a seal between the movable part 21 and the main part 20. In other embodiments, separate sealing members corresponding to the sealing ring portion and the second sealing portion, respectively, may be provided. To secure the wall bend fixture 1 in the closed position, snap locks 27 are provided on the main part 20, which snap locks 27 are configured to engage with depressions 28 formed on the movable part 21, close to the first opening 11. Instead of snap locks, other connection means may of course be used, e.g. clamps or screws or similar. In the shown embodiment, the wall bend fixture does not comprise any means for locking the wall bend fixture in the open position.

The first opening 11 of the conduit 8 and the sealing member 16 are located on the movable part 21, while the second opening 12 and the locking member 14 are located on the main part 20. A stopping member 22, formed as a flange protruding into the conduit 8, is formed behind the bent portion 13 of the conduit 8 on the movable part 21. When in the closed position, the stopping member 22 is located in the first portion 9 of the conduit 8, between the locking member 14 and the bent portion 13 of the conduit 8. In the closed position, both the stopping member 22 and the locking member 14 thus extend partly around an inner circumference of the conduit 8 and into the conduit 8.

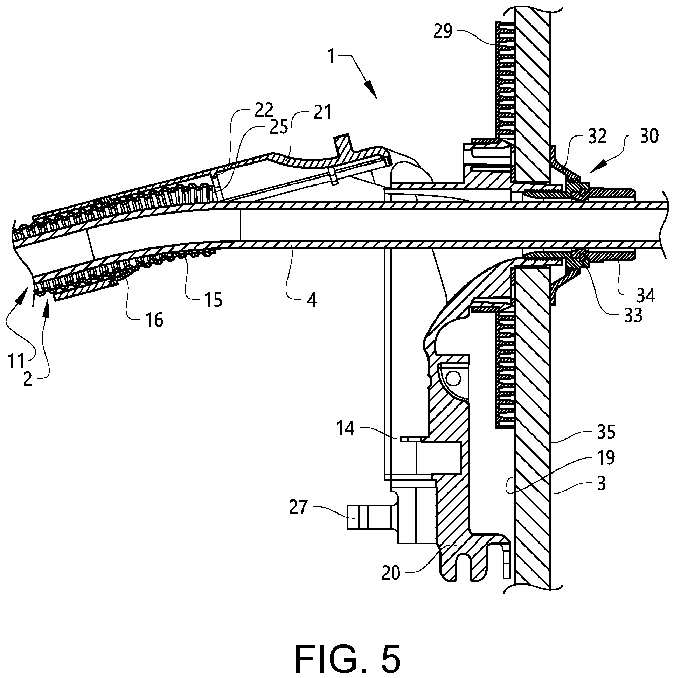

Fig. 5 shows the wall bend fixture 1 in the open position, mounted in the structure 3 and with the pipe assembly 2 mounted in the wall bend fixture 1. In order to install the pipe assembly 2 in the wall bend fixture 1, both the inner pipe 4 and the outer pipe 15 are pulled or pushed through the first opening 11 and further through the sealing ring portion 23, when the wall bend fixture 1 is in the open position. The stopping member 22 prevents the end 25 of the outer pipe 15 from moving further in the direction of extension D, while the inner pipe 4 is pulled/pushed further and through the second opening 12. From the open position, the movable part 21 is thereafter pushed toward the main part 20 such that the snap locks 27 engage with the depressions 28 and the wall bend fixture is locked in the closed position. The inner pipe 4 is thereby bent by an angle of 90° and the outer pipe 15 is locked in its position by the locking member 14, the end 25 of the outer pipe 15 abutting the stopping member 22.

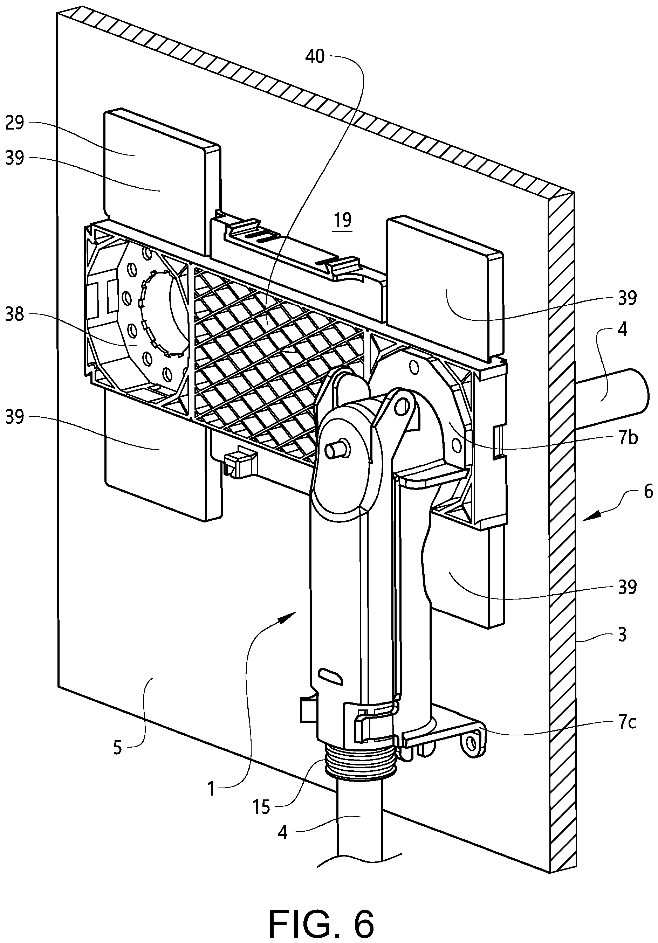

A wall bend fixture 1 according to the shown embodiment may be mounted in the structure 3 by means of clamping, with or without a mounting bracket 29 provided between the structure 3 and the wall bend fixture 1. In figs. 2, 3, 5 and 6, the wall bend fixture 1 is shown as mounted with the mounting bracket 29. Abutment surfaces 18 adapted to abut an inner surface 19 of the structure 3 on the first side 5 of the structure 3 are provided on the wall bend fixture 1. In the shown embodiment, the abutment surfaces 18 are on one hand provided on a first support portion 7b of the housing 7, located around a protruding portion 7a of the housing, configured to extend through the structure 3 from the first side 5 to the second side 6. On the other hand, abutment surfaces 18 are provided on a second support portion 7c, located close to the first opening 11.

An attachment means for attaching the wall bend fixture 1 to a retainer 30 on the second side 6 of the structure 3 is also provided, here in the form of an internal thread 31 provided in the second end portion 10 of the conduit 8, in connection with the opening 12 (see fig. 4a). The retainer 30 may be formed in one part, but in the shown embodiment comprises an annular contact member 32, having a contact surface 36 configured to contact an outer surface 35 of the structure 3. It further comprises a first coupling member 33 and a second coupling member 34, wherein the first coupling member 33 is provided with an external thread 37 configured to engage with the internal thread 31. When the retainer 30 is mounted, the contact surface 36 presses against the outer surface 35 of the structure 3. At the same time, the wall bend fixture 1 is being pulled towards the inner surface 19 of the structure 3. Depending on whether a mounting bracket 29 is used or not, some or all of the abutment surfaces 18 are thereby pressed against the inner surface 19 or against the mounting bracket 29, such that the structure 3 is clamped between the retainer 30 and the wall bend fixture 1.

In the shown embodiment, the mounting bracket 29 is configured to receive two wall bend fixtures 1. For this purpose, two spaced apart receiving sections 38 are provided, formed as depressions in the mounting bracket 29. Each receiving section 38 is formed with an opening for receiving the protruding portion 7a of the housing 7, comprising the second end portion 10 of the conduit 8. The support portion 7b of the housing 7 of the wall bend fixture 1 is adapted to fit in the receiving section 38 and to be fixed therein using snap locks. Above and below the receiving sections 38, supporting sections 39 extend. A connecting section 40 connect the receiving sections 38. The mounting bracket 29 has a rear surface configured to contact the inner surface 19 of the structure 3. If desired, it may be fastened to the structure 3, for example by means of screws, either from the second side 6 or the first side 5, or by gluing it to the structure 3.

The pipe assembly may be a pipe assembly used for water distribution, but the pipe assembly may of course also be used for other kinds of fluid distribution.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A wall bend fixture (1) for installing a pipe assembly (2) in a structure (3), the wall bend fixture (1) being adapted to be mounted in the structure (3) and guide at least an inner pipe (4) of the pipe assembly (2) through the structure (3) from a first side (5) of the structure (3) to a second side (6) of the structure (3), the wall bend fixture (1) comprising:
- a housing (7) defining a conduit (8) for receiving and guiding the pipe assembly (2), the conduit (8) comprising:
∘ a first end portion (9) configured to be located at the first side (5) of the structure when the wall bend fixture is mounted in the structure, wherein the first end portion (9) comprises a first opening (11) configured to receive the pipe assembly (2) at the first side (5),
∘ a second end portion (10) configured to be located at the second side (6) of the structure when the wall bend fixture is mounted in the structure, wherein the second end portion (10) comprises a second opening (12) configured to deliver the inner pipe (4) at the second side (6),
∘ a bent portion (13) extending between the first end portion (9) and the second end portion (10),
**characterized in that** the fixture further comprises
- a locking member (14) configured to mechanically lock an outer pipe (15) of the pipe assembly (2) within the conduit (8),
- a sealing member (16) configured to provide a seal between the outer pipe (15) and an inner wall (17) of the housing (7) in the first end portion (9) of the conduit (8).

2. The wall bend fixture according to claim 1, wherein the inner wall (17) of the housing (7) is water impermeable.

3. The wall bend fixture according to claim 1 or 2, wherein the sealing member (16) comprises a sealing ring portion (23) located behind the locking member (14) in a direction of extension (D) of the wall bend fixture (1).

4. The wall bend fixture according to any one of the preceding claims, wherein the locking member (14) is located in the first end portion (9) of the conduit (8).

5. The wall bend fixture according to any one of the preceding claims, wherein the locking member (14) comprises a flange configured to interlock with a groove provided in the outer pipe (15).

6. The wall bend fixture according to any one of the preceding claims, wherein the conduit (8) is configured to allow a right angle bend of the inner pipe (4).

7. The wall bend fixture according to any one of the preceding claims, wherein the wall bend fixture further comprises at least one abutment surface (18) adapted to abut a surface (19) of the structure (3) on the first side (5) of the structure (3), and an attachment means for attaching the wall bend fixture to a retainer on the second side (6) of the structure (3).

8. The wall bend fixture according to any one of the preceding claims, wherein the housing (7) comprises a main part (20) and a movable part (21), the movable part (21) being movable with respect to the main part (20) between an open position and a closed position, wherein, in the closed position, the main part (20) and the movable part (21) together form at least the bent portion (13) of the conduit (8).

9. The wall bend fixture according to claim 8, wherein the movable part (21) is configured to be pivotable with respect to the main part (20).

10. The wall bend fixture according to claim 8 or 9, wherein the movable part (21) comprises the first opening (11) configured to receive the pipe assembly (2), and wherein the main part (20) comprises the second opening (12) configured to deliver the inner pipe (4) at the second side (6).

11. The wall bend fixture according to claim 10, wherein the locking member (14) is arranged on the main part (20).

12. The wall bend fixture according to claim 10 or 11, wherein the movable part (21) comprises a stopping member (22) configured to abut an end of the outer pipe, wherein, in the closed position, the stopping member (22) is arranged between the locking member (14) and the bent portion (13) of the conduit (8).

13. A wall bend fixture assembly comprising:
- a wall bend fixture (1) according to any one of the preceding claims, wherein the wall bend fixture (1) comprises an abutment surface (18) configured to abut an inner surface (19) of the structure (3), and
- a retainer (30) adapted to be attached to the wall bend fixture (1) on the second side (6) of the structure (3) and abut an outer surface (35) of the structure (3) such that the structure (3) is clamped between the retainer (30) and the abutment surface (18) of the wall bend fixture (1).

14. The wall bend fixture assembly according to claim 13, further comprising:
- a mounting bracket (29) adapted to be mounted on the first side (5) of the structure (3) and adapted to receive the wall bend fixture (1) such that the second end portion (10) of the conduit (8) of the wall bend fixture (1) extends through an opening of the mounting bracket (29).

## Patentansprüche

1. Wandbogenhalterung (1) zum Installieren einer Rohranordnung (2) in einer Struktur (3), wobei die Wandbogenhalterung (1) angepasst ist, um in der Struktur (3) montiert zu werden und wenigstens ein Innenrohr (4) der Rohranordnung (2) durch die Struktur (3) von einer ersten Seite (5) der Struktur (3) zu einer zweiten Seite (6) der Struktur (3) zu führen, wobei die Wandbogenhalterung (1) Folgendes umfasst:
- ein Gehäuse (7), das eine Leitung (8) zum Aufnehmen und Führen der Rohranordnung (2) definiert, wobei die Leitung (8) Folgendes umfasst:
∘ einen ersten Endabschnitt (9), der konfiguriert ist, um sich an der ersten Seite (5) der Struktur zu befinden, wenn die Wandbogenhalterung in der Struktur montiert ist, wobei der erste Endabschnitt (9) eine erste Öffnung (11) umfasst, die konfiguriert ist, um die Rohranordnung (2) an der ersten Seite (5) aufzunehmen,
∘ einen zweiten Endabschnitt (10), der konfiguriert ist, um sich an der zweiten Seite (6) der Struktur zu befinden, wenn die Wandbodenhalterung in der Struktur montiert ist, wobei der zweite Endabschnitt (10) eine zweite Öffnung (12) umfasst, die konfiguriert ist, um das Innenrohr (4) an der zweiten Seite (6) abzugeben,
∘ einen gebogenen Abschnitt (13), der sich zwischen dem ersten Endabschnitt (9) und dem zweiten Endabschnitt (10) erstreckt,
**dadurch gekennzeichnet, dass** die Halterung ferner Folgendes umfasst
- ein Verriegelungselement (14), das konfiguriert ist, um ein Außenrohr (15) der Rohranordnung (2) innerhalb der Leitung (8) mechanisch zu verriegeln,
- ein Dichtungselement (16), das konfiguriert ist, um eine Dichtung zwischen dem Außenrohr (15) und einer Innenwand (17) des Gehäuses (7) in dem ersten Endabschnitt (9) der Leitung (8) bereitzustellen.

2. Wandbogenhalterung nach Anspruch 1, wobei die Innenwand (17) des Gehäuses (7) wasserundurchlässig ist.

3. Wandbogenhalterung nach Anspruch 1 oder 2, wobei das Dichtungselement (16) einen Dichtungsringabschnitt (23) umfasst, der sich in einer Erstreckungsrichtung (D) der Wandbogenhalterung (1) hinter dem Verriegelungselement (14) befindet.

4. Wandbogenhalterung nach einem der vorhergehenden Ansprüche, wobei sich das Verriegelungselement (14) in dem ersten Endabschnitt (9) der Leitung (8) befindet.

5. Wandbogenhalterung nach einem der vorhergehenden Ansprüche, wobei das Verriegelungselement (14) einen Flansch umfasst, der konfiguriert ist, um mit einer Nut zu verriegeln, die in dem Außenrohr (15) bereitgestellt ist.

6. Wandbogenhalterung nach einem der vorhergehenden Ansprüche, wobei die Leitung (8) konfiguriert ist, um eine rechtwinklige Biegung des Innenrohrs (4) zu ermöglichen.

7. Wandbogenhalterung nach einem der vorhergehenden Ansprüche, wobei die Wandbogenhalterung ferner wenigstens eine Auflageoberfläche (18) umfasst, die angepasst ist, um an einer Oberfläche (19) der Struktur (3) auf der ersten Seite (5) der Struktur (3) aufzuliegen und ein Befestigungsmittel zum Befestigen der Wandbogenhalterung an einem Halter auf der zweiten Seite (6) der Struktur (3).

8. Wandbogenhalterung nach einem der vorhergehenden Ansprüche, wobei das Gehäuse (7) einen Hauptteil (20) und einen bewegbaren Teil (21) umfasst, wobei der bewegbare Teil (21) in Bezug auf den Hauptteil (20) zwischen einer offenen Position und einer geschlossenen Position bewegbar ist, wobei, in der geschlossenen Position, der Hauptteil (20) und der bewegbare Teil (21) zusammen wenigstens den gebogenen Abschnitt (13) der Leitung (8) ausbilden.

9. Wandbogenhalterung nach Anspruch 8, wobei der bewegbare Teil (21) konfiguriert ist, um in Bezug auf den Hauptteil (20) schwenkbar zu sein.

10. Wandbogenhalterung nach Anspruch 8 oder 9, wobei der bewegbare Teil (21) die erste Öffnung (11) umfasst, die konfiguriert ist, um die Rohranordnung (2) aufzunehmen, und wobei der Hauptteil (20) die zweite Öffnung (12) umfasst, die konfiguriert ist, um das Innenrohr (4) an der zweiten Seite (6) abzugeben.

11. Wandbogenhalterung nach Anspruch 10, wobei das Verriegelungselement (14) an dem Hauptteil (20) eingerichtet ist.

12. Wandbogenhalterung nach Anspruch 10 oder 11, wobei der bewegbare Teil (21) ein Stoppelement (22) umfasst, das konfiguriert ist, um an einem Ende des Außenrohrs aufzuliegen, wobei, in der geschlossenen Position, das Stoppelement (22) zwischen dem Verriegelungselement (14) und dem gebogenen Abschnitt (13) der Leitung (8) eingerichtet ist.

13. Wandbogenhalterungsanordnung, die Folgendes umfasst:
- eine Wandbogenhalterungsanordnung, die Folgendes umfasst: eine Wandbogenhalterung (1) nach einem der vorhergehenden Ansprüche, wobei die Wandbogenhalterung (1) eine Auflageoberfläche (18) umfasst, die konfiguriert ist, um an einer Innenoberfläche (19) der Struktur (3) aufzuliegen, und
- einen Halter (30), der angepasst ist, um an der Wandbogenhalterung (1) auf der zweiten Seite (6) der Struktur (3) befestigt zu werden und an einer Außenoberfläche (35) der Struktur (3) derart aufzuliegen, dass die Struktur (3) zwischen dem Halter (30) und der Auflageoberfläche (18) der Wandbogenhalterung (1) eingespannt ist.

14. Wandbogenhalterungsanordnung nach Anspruch 13, die ferner Folgendes umfasst:
- einen Montageträger (29), der angepasst ist, um an der ersten Seite (5) der Struktur (3) montiert zu werden und die Wandbogenhalterung (1) derart aufzunehmen, dass sich der zweite Endabschnitt (10) der Leitung (8) der Wandbogenhalterung (1) durch eine Öffnung des Montageträgers (29) erstreckt.

## Revendications

1. Fixation coudée murale (1) pour installer un ensemble de tuyaux (2) dans une structure (3), la fixation coudée murale (1) étant adaptée pour être montée dans la structure (3) et guider au moins un tuyau interne (4) de l'ensemble de tuyaux (2) à travers la structure (3) depuis un premier côté (5) de la structure (3) jusqu'à un second côté (6) de la structure (3), la fixation coudée murale (1) comprenant :
- un boîtier (7) définissant un conduit (8) pour recevoir et guider l'ensemble de tuyaux (2), le conduit (8) comprenant :
∘ une première partie d'extrémité (9) conçue pour être située au niveau du premier côté (5) de la structure lorsque la fixation coudée murale est montée dans la structure, la première partie d'extrémité (9) comprenant une première ouverture (11) conçue pour recevoir l'ensemble de tuyaux (2) au niveau du premier côté (5),
∘ une seconde partie d'extrémité (10) conçue pour être située au niveau du second côté (6) de la structure lorsque la fixation coudée murale est montée dans la structure, la seconde partie d'extrémité (10) comprenant une seconde ouverture (12) conçue pour délivrer le tuyau interne (4) au niveau du second côté (6),
∘ une partie coudée (13) s'étendant entre la première partie d'extrémité (9) et la seconde partie d'extrémité (10),
**caractérisé en ce que** la fixation comprend en outre
- un élément de verrouillage (14) conçu pour verrouiller mécaniquement un tuyau externe (15) de l'ensemble de tuyaux (2) à l'intérieur du conduit (8),
- un élément d'étanchéité (16) conçu pour fournir un joint entre le tuyau externe (15) et une paroi interne (17) du boîtier (7) dans la première partie d'extrémité (9) du conduit (8).

2. Fixation coudée murale selon la revendication 1, dans laquelle la paroi interne (17) du boîtier (7) est imperméable à l'eau.

3. Fixation coudée murale selon la revendication 1 ou 2, dans laquelle l'élément d'étanchéité (16) comprend une partie de bague d'étanchéité (23) située derrière l'élément de verrouillage (14) dans une direction d'extension (D) de la fixation coudée murale (1).

4. Fixation coudée murale selon l'une quelconque des revendications précédentes, dans laquelle l'élément de verrouillage (14) est situé dans la première partie d'extrémité (9) du conduit (8).

5. Fixation coudée murale selon l'une quelconque des revendications précédentes, dans laquelle l'élément de verrouillage (14) comprend une bride conçue pour s'emboîter dans une rainure fournie dans le tuyau externe (15).

6. Fixation coudée murale selon l'une quelconque des revendications précédentes, dans laquelle le conduit (8) est conçu pour permettre un coude à angle droit du tuyau interne (4).

7. Fixation coudée murale selon l'une quelconque des revendications précédentes, dans laquelle la fixation coudée murale comprend en outre au moins une surface de butée (18) adaptée pour venir en butée contre une surface (19) de la structure (3) sur le premier côté (5) de la structure (3), et un moyen d'attache pour attacher la fixation coudée murale à un dispositif de retenue sur le second côté (6) de la structure (3).

8. Fixation coudée murale selon l'une quelconque des revendications précédentes, dans laquelle le boîtier (7) comprend une partie principale (20) et une partie mobile (21), la partie mobile (21) étant mobile par rapport à la partie principale (20) entre une position ouverte et une position fermée, dans laquelle, en position fermée, la partie principale (20) et la partie mobile (21) forment ensemble au moins la partie coudée (13) du conduit (8).

9. Fixation coudée murale selon la revendication 8, dans laquelle la partie mobile (21) est conçue pour pouvoir pivoter par rapport à la partie principale (20).

10. Fixation coudée murale selon la revendication 8 ou 9, dans laquelle la partie mobile (21) comprend la première ouverture (11) conçue pour recevoir l'ensemble de tuyaux (2), et dans laquelle la partie principale (20) comprend la seconde ouverture (12) conçue pour délivrer le tuyau interne (4) au niveau du second côté (6).

11. Fixation coudée murale selon la revendication 10, dans laquelle l'élément de verrouillage (14) est agencé sur la partie principale (20).

12. Fixation coudée murale selon la revendication 10 ou 11, dans laquelle la partie mobile (21) comprend un élément d'arrêt (22) conçu pour venir en butée contre une extrémité du tuyau externe, dans laquelle, en position fermée, l'élément d'arrêt (22) est agencé entre l'élément de verrouillage (14) et la partie coudée (13) du conduit (8).

13. Ensemble de fixation coudée murale comprenant :
- un ensemble de fixation coudée murale comprenant : une fixation coudée murale (1) selon l'une quelconque des revendications précédentes, dans laquelle la fixation coudée murale (1) comprend une surface de butée (18) conçue pour venir en butée contre une surface interne (19) de la structure (3), et
- un dispositif de retenue (30) adapté pour être attaché à la fixation coudée murale (1) sur le second côté (6) de la structure (3) et venir en butée contre une surface externe (35) de la structure (3) de telle sorte que la structure (3) est serrée entre le dispositif de retenue (30) et la surface de butée (18) de la fixation coudée murale (1).

14. Ensemble de fixation coudée murale selon la revendication 13, comprenant en outre :
- un support de montage (29) adapté pour être monté sur le premier côté (5) de la structure (3) et adapté pour recevoir la fixation coudée murale (1) de telle sorte que la seconde partie d'extrémité (10) du conduit (8) de la fixation coudée murale (1) s'étend à travers une ouverture du support de montage (29).
